(19) Europäisches Patentamt / European Patent Office / Office européen des brevets

(11) **EP 2 367 022 B1**

(12) **FASCICULE DE BREVET EUROPEEN**

(45) Date de publication et mention de la délivrance du brevet:
**28.06.2017 Bulletin 2017/26**

(51) Int Cl.:
*G01S 13/76* (2006.01)

(21) Numéro de dépôt: **11156588.3**

(22) Date de dépôt: **02.03.2011**

(54) **Procédé et système de localisation d'objets**

Verfahren und System zur Lokalisierung von Objekten

Method and system for locating objects

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.03.2010 EP 10156749**

(43) Date de publication de la demande:
**21.09.2011 Bulletin 2011/38**

(73) Titulaire: **The Swatch Group Research and Development Ltd**
**2074 Marin (CH)**

(72) Inventeur: **De Rosa, Luca**
**2072 St-Blaise (CH)**

(74) Mandataire: **Surmely, Gérard et al**
**ICB**
**Ingénieurs Conseils en Brevets SA**
**Faubourg de l'Hôpital 3**
**2001 Neuchâtel (CH)**

(56) Documents cités:
WO-A1-2009/040699    WO-A2-2006/098791
DE-A1- 10 237 605    GB-A- 2 392 032
US-A1- 2003 034 887    US-A1- 2006 033 662

- PLETCHER N M ET AL: "A 2GHz 52 Î 1/4 W Wake-Up Receiver with -72dBm Sensitivity Using Uncertain-IF Architecture", SOLID-STATE CIRCUITS CONFERENCE, 2008. ISSCC 2008. DIGEST OF TECHNICAL PAPERS. IEEE INTERNATIONAL, IEEE, PISCATAWAY, NJ, USA, 3 février 2008 (2008-02-03), pages 524-633, XP031440532, ISBN: 978-1-4244-2010-0

## Description

Domaine technique de l'invention

La présente invention concerne un procédé de localisation d'un objet cherché au moyen de signaux électromagnétiques échangés entre un dispositif de recherche, incorporé à un appareil portable, et un dispositif cible attaché à l'objet cherché, le dispositif de recherche comportant un émetteur-récepteur associé à une paire d'antennes espacées l'une de l'autre, des moyens d'affichage et des moyens électroniques pour gérer l'émetteur-récepteur et les moyens d'affichage,. Le dispositif cible comporte un émetteur-récepteur associé à une antenne et à des moyens électroniques capables de détecter la réception de signaux provenant du dispositif de recherche et d'y répondre par des signaux représentant notamment l'identité du dispositif cible.

L'invention concerne également un dispositif de recherche et un dispositif cible permettant la mise en oeuvre du procédé de l'invention.

Arrière-plan technologique

Il arrive de perdre un objet d'usage courant, ou surtout d'oublier à quel endroit on l'a laissé alentour, par exemple dans une habitation ou un lieu de travail. Si l'objet est de petite taille, comme un trousseau de clés ou des lunettes, sa recherche peut être difficile et longue. C'est pourquoi différents systèmes de localisation par transmission sans fil ont déjà été proposés. La présente invention prévoit d'utiliser la technologie sans fil UWB (Ultra Wide Band) dans un tel système. Les principaux avantages de cette technologie dans la localisation d'objets à courte distance sont mentionnés dans la demande de brevet US 2006/0033662. Toutefois, jusqu'ici l'utilisation des signaux UWB dans ces applications devait se faire en combinaison avec des signaux en radiofréquences à bande étroite.

La demande de brevet US 2008/0136644 décrit en détail un système de recherche et localisation d'objets comportant des étiquettes d'identification qui contiennent à la fois des circuits RF à bande étroite et des circuits UWB. Ce système permet notamment de mesurer la distance entre un dispositif de recherche local et un objet cherché en utilisant la technologie UWB, en mesurant le temps de parcours aller-retour des signaux. Dans le document, il est précisé que la technologie UWB permet de mesurer des distances relativement courtes avec une précision suffisante pour localiser des objets, typiquement une précision de l'ordre du décimètre, voire du centimètre. Toutefois, le système proposé implique une construction assez complexe et nécessite en outre une opération de synchronisation entre le dispositif de recherche et les étiquettes lors de chaque recherche.

Un autre système utilisant des signaux UWB pour localiser un objet à courte distance est décrit dans la demande de brevet EP 1 630 966 et l'un de ses modes de réalisation présente les caractéristiques énoncées en préambule ci-dessus. Ce système est destiné principalement à la recherche d'une personne munie d'un terminal mobile, par exemple un téléphone, qui constitue l'objet cherché et le dispositif cible au sens de ce qui précède. Le procédé de recherche comprend deux phases successives. Dans la première, il s'agit de répondre à un appel d'urgence provenant par exemple du terminal mobile, par une localisation générale du terminal mobile, par exemple au moyen du GPS, et par l'envoi d'une équipe de secours sur place. La seconde phase est une localisation à courte distance, en général pour trouver des victimes, et utilise l'échange de signaux UWB entre le terminal mobile cherché et le dispositif de recherche en mains de l'équipe de secours, de la manière exposée ci-après.

Le terminal mobile émet ses signaux caractéristiques UWB sur commande, soit par pression manuelle sur une touche, soit automatiquement en réponse à une requête de localisation, envoyée par exemple par SMS, ou en réponse à la détection d'une situation dangereuse par le terminal lui-même. Pour localiser le terminal mobile au moyen de ses signaux UWB, le dispositif de recherche comporte quatre antennes disposées aux sommets d'un losange et associées par paires à une électronique qui mesure les différences de temps de réception du signal UWB dans chaque paire d'antennes. A partir de ces mesures, le dispositif de recherche calcule les coordonnées orthogonales du terminal mobile par rapport au référentiel défini par les quatre antennes, puis les coordonnées polaires (azimut et distance) et affiche ces dernières au moyen d'une aiguille et d'un affichage numérique.

Le système divulgué dans le document précité EP 1 630 966 n'est pas aisément applicable à la recherche d'objets perdus, parce que son terminal mobile, ne pouvant pas être activé manuellement dans un tel cas, devient trop compliqué pour se présenter comme une étiquette, par exemple, et avoir un mode de veille avec une consommation d'énergie quasi nulle. Un autre inconvénient résulte de la nécessité de quatre antennes placées aux sommets d'un losange, ce qui impose un volume relativement grand du dispositif de recherche.

Le document WO 2006/098791 décrit un procédé de localisation d'un objet cherché. Dans le cas où le dispositif de recherche comprend deux antennes, il est prévu de déterminer la direction de l'objet cherché sur la base d'une variation de fréquence dû à l'effet Doppler; ce qui impose que le dispositif de recherche soit en mouvement relativement à l'objet cherché. Il est prévu dans un exemple d'utiliser un accéléromètre pour résoudre un problème d'ambigüité de direction de l'objet cherché. Dans ce procédé, le dispositif de recherche émet un seul signal de localisation qui est reçu par le dispositif cible, lequel émet un signal de réponse qui est capté par chacune des deux antennes du dispositif de recherche. Le dispositif cible doit déterminer une fréquence précise, une phase et une cadence pour l'émission du signal de réponse.

Le document US 2003/034887 décrit un système portable pour localiser un objet recherché portant un dispositif cible utilisant des signaux à bande ultra-large (UltraWide Band, UWB).

Résumé de l'invention

La présente invention vise à fournir un procédé et un système de localisation d'objet qui permettent d'éviter substantiellement les inconvénients de l'art antérieur. Selon les objectifs de l'invention, le dispositif cible devrait être réalisable sous une assez petite taille pour être associé discrètement à l'objet concerné, par exemple sous la forme d'une plaquette ou d'une étiquette collée. La mise en marche du dispositif cible pour répondre au dispositif de recherche devrait pouvoir se faire sans autre action que la réception de signaux provenant du dispositif de recherche. Un autre but de l'invention est de combiner le dispositif de recherche avec un appareil électronique portable de petites dimensions, afin de permettre à l'utilisateur d'avoir le dispositif de recherche constamment à sa disposition et de le porter sans subir de gêne.

Selon un premier aspect de l'invention, il est prévu un procédé de localisation tel que spécifié dans la revendication 1 ci-jointe. Les revendications dépendantes 2 à 7 définissent des modes de mise en oeuvre particuliers du procédé selon l'invention.

Selon d'autres aspects de l'invention, la revendication 8 définit un dispositif de recherche notamment pour la mise en oeuvre du procédé de l'invention tandis que la revendication 12 définit un dispositif cible intervenant notamment dans ce procédé. Les revendications dépendantes définissent des variantes de réalisation particulières.

En combinant la transmission en UWB exclusivement et l'utilisation d'un signal de réveil UWB pour activer le dispositif cible, il devient possible de garder ce dernier en état de veille sur une très longue durée, typiquement plusieurs années, avec une faible quantité d'énergie électrique. Le dispositif cible, utilisant une seule bande de fréquence et une unique antenne UWB, peut être réalisé sous une forme bien plus réduite que selon l'art antérieur et être attaché à des objets de petite taille, comme un porte-clés, un portefeuille ou des lunettes. La consommation d'énergie du dispositif de recherche est aussi notablement réduite. En combinaison avec l'utilisation d'une seule paire d'antennes, de faible taille et éloignées de quelques centimètres seulement compte tenu de la fréquence très élevée des signaux UWB, cela permet d'incorporer le dispositif de recherche dans un appareil portable de petite taille, notamment un téléphone portable ou une montre.

Dans un mode de réalisation particulier l'invention permet avantageusement de loger le dispositif de recherche dans une boîte de montre-bracelet de taille normale et d'utiliser les organes d'affichage du temps pour indiquer la position de l'objet cherché. C'est ainsi que l'utilisateur, portant sa montre comme d'habitude, disposera immédiatement du dispositif de recherche quand il en aura besoin.

D'autres particularités et avantages de l'invention apparaîtront ci-dessous dans la description de divers modes de réalisation, présentés à titre d'exemples non limitatifs en référence aux dessins annexés.

Description sommaire des dessins

La figure 1 représente schématiquement deux éléments constituant la base du système de localisation, à savoir un dispositif de recherche D1 incorporé à un appareil portable et un dispositif cible D2 attaché à un objet cherché.

La figure 2 représente schématiquement le dispositif de recherche D1, incorporé à une montre-bracelet.

La figure 3 représente schématiquement différentes étapes du procédé de localisation, dans un mode opératoire avec translation du dispositif de recherche.

La figure 4 représente schématiquement des étapes successives du procédé de localisation, dans un mode opératoire avec rotation du dispositif de recherche.

La figure 5 représente schématiquement deux phases successives d'une séquence de localisation par échange de signaux UWB entre le dispositif de recherche et le dispositif cible.

La figure 6 est un schéma-bloc du dispositif de recherche D1.

La figure 7 est un schéma-bloc du dispositif cible D2.

La figure 8 est un schéma des étapes du fonctionnement du système des figures 1 à 7 pour une opération de localisation d'un objet.

La figure 9 représente schématiquement des étapes successives du procédé de localisation, dans une variante où le dispositif de recherche contient un accéléromètre.

Description détaillée de divers modes de réalisation

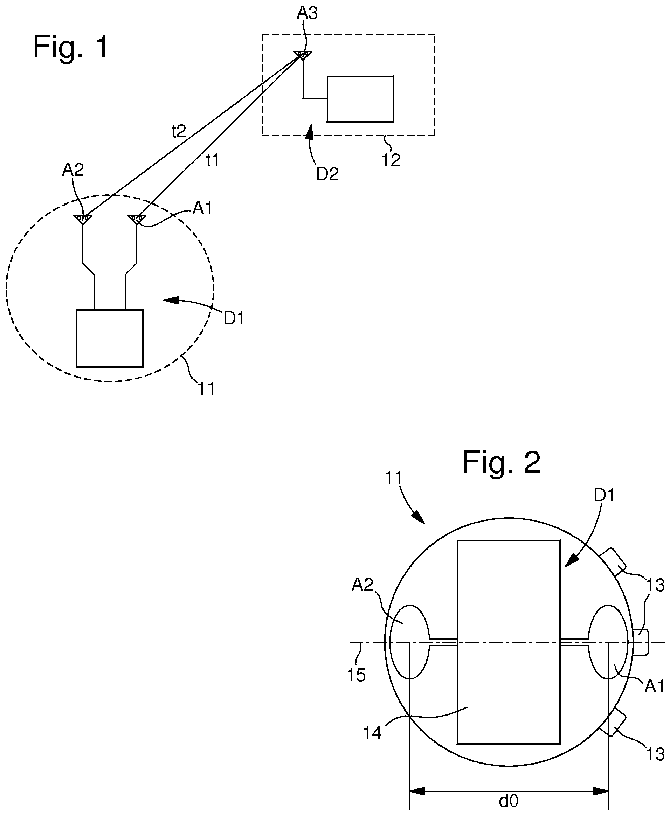

Le système de localisation d'objets représenté très schématiquement dans la figure 1 comprend un dispositif de recherche D1 et au moins un dispositif cible D2. Le dispositif de recherche D1 est incorporé à un appareil portable 11 et comporte un émetteur-récepteur en technologie UWB, doté de deux antennes A1 et A2. Le dispositif cible D2 est attaché à un objet 12, par exemple un trousseau de clés, et comporte un émetteur-récepteur en technologie UWB, doté d'une antenne A3. Le dessin montre en outre que dans la plupart des positions respectives des dispositifs D1 et D2, la distance entre les antennes A1 et A3 diffère de celle entre les antennes A2 et A3, donc les temps de parcours respectifs t1 et t2 des signaux UWB sur ces distances sont différents.

Dans le mode de réalisation particulier illustré par la figure 2, l'appareil portable 11 contenant le dispositif de recherche D1 est une montre électronique, en particulier une montre-bracelet, ayant des organes manuels de commande 13 tels que des poussoirs et/ou une tige de commande et/ou une glace tactile. L'ensemble électronique 14 du dispositif de recherche est logé à l'intérieur de la boîte étanche de la montre 11 et peut être alimenté par la même pile que la montre. Grâce à la fréquence très élevée (de l'ordre de 3,1 à 10 GHz) utilisée en UWB, la taille des antennes est très petite. On peut utiliser notamment des antennes du type coplanaire (microstrip). Les antennes A1 et A2 ont des emplacements diamétralement opposés, afin que leur écartement d0 mesuré le long de l'axe 15 passant par le point central de chacune des deux antennes soit aussi grand que possible. Selon le matériau constitutif de la boîte, les antennes pourront être logées avec les composants horlogers à l'intérieur de celle-ci. Une valeur de d0 comprise entre 3 et 4 cm environ est tout à fait compatible avec la taille habituelle d'une montre-bracelet et avec la précision nécessaire dans les mesures et calculs décrits plus loin. On notera que le standard UWB permet d'obtenir une précision de l'ordre de grandeur du millimètre.

Comme on l'a dit plus haut, l'un des avantages de l'incorporation du dispositif de recherche D1 dans une montre est sa disponibilité permanente, puisque l'utilisateur porte généralement sa montre toute la journée. Un autre avantage réside dans la possibilité d'utiliser les organes d'affichages habituels d'une montre électronique pour les indications fournies par le dispositif de recherche, dans la mesure où la montre comporte un affichage analogique de l'heure, ce qui permet d'indiquer des directions au moyen des aiguilles. Un affichage numérique ou alphanumérique, prévu par exemple pour indiquer la date ou un temps chronométré, permet d'indiquer la distance de l'objet cherché, mais cette distance pourrait aussi être indiquée de manière analogique, par exemple au moyen d'une aiguille de compteur de chronographe. Ainsi, la synergie entre le dispositif de recherche et la montre-bracelet est très poussée puisque sont mis en commun le boîtier étanche, l'alimentation électrique, les moyens d'affichage, les moyens manuels de commande et le bracelet de fixation au poignet de l'utilisateur.

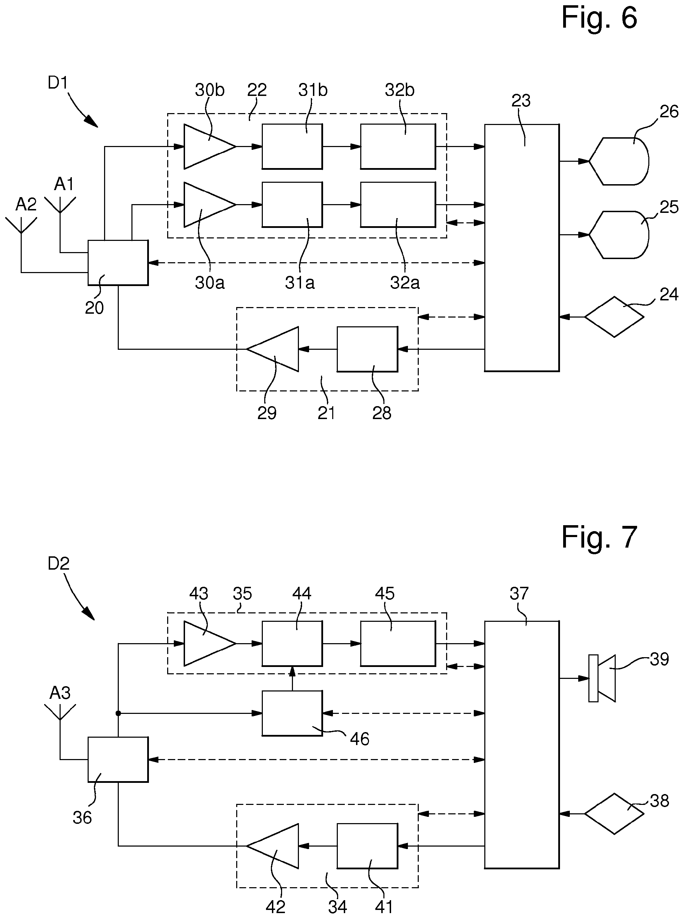

On se référera à la figure 6 pour décrire un mode de réalisation de l'ensemble électronique du dispositif de recherche D1. A travers un commutateur émission/réception 20 (facultatif), les antennes A1 et A2 sont connectées alternativement à un module émetteur UWB 21 et à un module récepteur UWB 22. Les modules 21 et 22 sont reliés à un module de traitement numérique 23, relié lui-même à une touche d'entrée 24, à un affichage analogique 25 et à un affichage numérique 26, les affichages 25 et 26 servant aussi à afficher l'heure et d'autres valeurs temporelles dans la montre 11. La touche d'entrée 24 est une commande manuelle, par exemple actionnée par l'un des poussoirs 13 de la montre ou par la glace tactile.

Le module émetteur UWB 21 comporte un générateur d'impulsions UWB 28 et un amplificateur 29 dont le signal de sortie parvient simultanément aux deux antennes A1 et A2 à travers le commutateur 20. Le module récepteur UWB 22 comporte deux chaines parallèles recevant respectivement les signaux des antennes A1 et A2 et comprenant chacune un amplificateur 30a, 30b, un détecteur d'énergie 31a, 31b et un démodulateur 32a, 32b qui délivre son signal de sortie au module de traitement numérique 23. Celui-ci coordonne le fonctionnement des éléments 20, 21 et 22 grâce aux liaisons numériques dessinées en pointillés, effectue les opérations décrites plus loin pour calculer la position de l'objet cherché et commande les affichages 25 et 26 pour indiquer cette position.

En référence à la figure 7, l'ensemble électronique du dispositif cible D2 comporte un module émetteur UWB 34 et un module récepteur UWB 35 qui sont connectés alternativement à l'antenne A3 par un commutateur émission/réception 36. Les modules 34 et 35 sont reliés à un module de traitement numérique 37, relié lui-même à une touche d'entrée 38 et, facultativement, à un transducteur acoustique 39. Le module émetteur UWB 34 comporte un générateur d'impulsions UWB 41 et un amplificateur 42 dont le signal de sortie parvient à l'antenne A3 à travers le commutateur 36. Le module récepteur UWB 35 comporte un amplificateur 43, un détecteur d'énergie 44 et un démodulateur 45 qui délivre son signal de sortie au module de traitement numérique 37. Celui-ci coordonne le fonctionnement des éléments 34, 35 et 36 par des signaux numériques sur les liaisons dessinées en pointillés, effectue les opérations décrites plus loin pour émettre des signaux UWB en réponse aux signaux reçus, et produit un signal avertisseur à diffuser par le transducteur acoustique 39 si celui-ci est présent.

Afin que D2 consomme très peu d'énergie à l'état de veille, il comporte un récepteur de réveil 46 qui reçoit également les signaux captés par l'antenne A3 et ne commande la mise en fonction du module récepteur 35 qu'après réception d'un signal de réveil codé. La structure et le fonctionnement d'un tel récepteur de réveil sont connus. Un exemple de réalisation est décrit dans l'article intitulé « A 2GHz 52μW Wake-Up Receiver With -72dBm Sensitivity Using Uncertain-IF Architecture », par N. Pletcher et al, 2008 IEEE International Solid-State Circuits Conference, Digest of Technical Papers, p. 524-525. La structure de base est très simple. Il s'agit d'un détecteur d'enveloppe calibré à la fréquence d'intérêt. Le signal de réveil reçu est un signal modulé en amplitude, avec une séquence d'informations (code) identifiant le dispositif à réveiller. Comme sa démodulation est très simple, elle est peu gourmande en énergie. L'alimentation avec une pile miniature permet de maintenir un tel récepteur en veille pendant une durée de plusieurs années, selon le cycle de service choisi (duty cycle).

Le module 37 comporte en outre une mémoire non volatile dans laquelle est enregistré le code représentant l'identité du dispositif cible D2, afin de le distinguer d'autres dispositifs cibles semblables D3, D4 etc. susceptibles d'être localisés au moyen du même dispositif de recherche D1. Ce code d'identité de D2 doit être enregistré dans une mémoire de D1 au cours d'une opération de déclaration, commandée par exemple par une combinaison d'actions sur la touche d'entrée 38, avant que le dispositif de recherche puisse être utilisé pour localiser ce dispositif cible. Il en va de même pour les codes d'identité des autres dispositifs cibles D3, D4 etc. que l'on voudrait ajouter au système, le cas échéant.

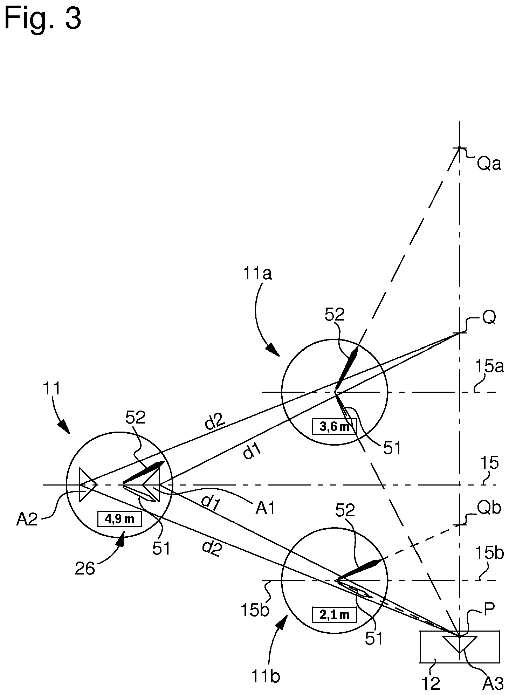

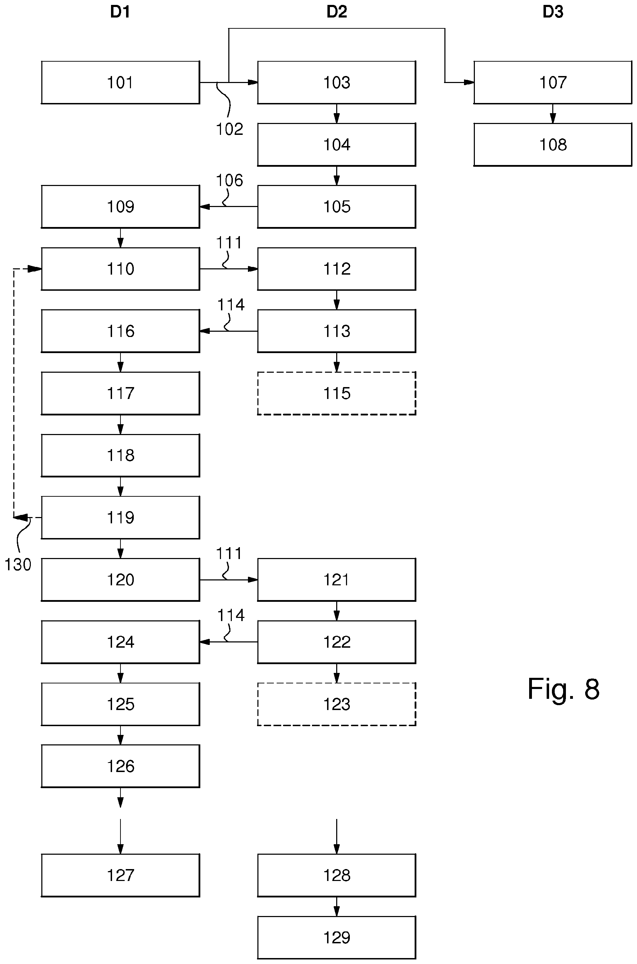

On décrira maintenant le fonctionnement du système pour localiser l'objet 12 lié au dispositif cible D2 en référence aux figures 3 à 8. Le schéma de la figure 8 représente les étapes opérationnelles effectuées dans ou par les dispositifs D1, D2 et D3 (si celui-ci est présent au voisinage) pour une opération de localisation de l'objet 12.

Dans la première étape 101, que l'utilisateur amorce par un actionnement approprié des organes de commande 13 (voir figure 2) de la montre 11, le dispositif de recherche D1 émet un signal de réveil 102 contenant le code d'identité du dispositif cible D2. Celui-ci reçoit et reconnaît le signal 102 dans l'étape 103 au moyen de son récepteur de réveil 46, qui met en service le reste de l'électronique de D2 dans l'étape 104. Dans l'étape 105, D2 émet un signal d'accusé de réception 106 qui contient aussi son code d'identité. Pendant ce temps, l'autre dispositif cible D3 a aussi reçu en 107 le signal de réveil 102 parce qu'il se trouvait assez près, mais son récepteur de réveil ne reconnaît pas son identité dans ce signal, donc D3 reste inactif en 108.

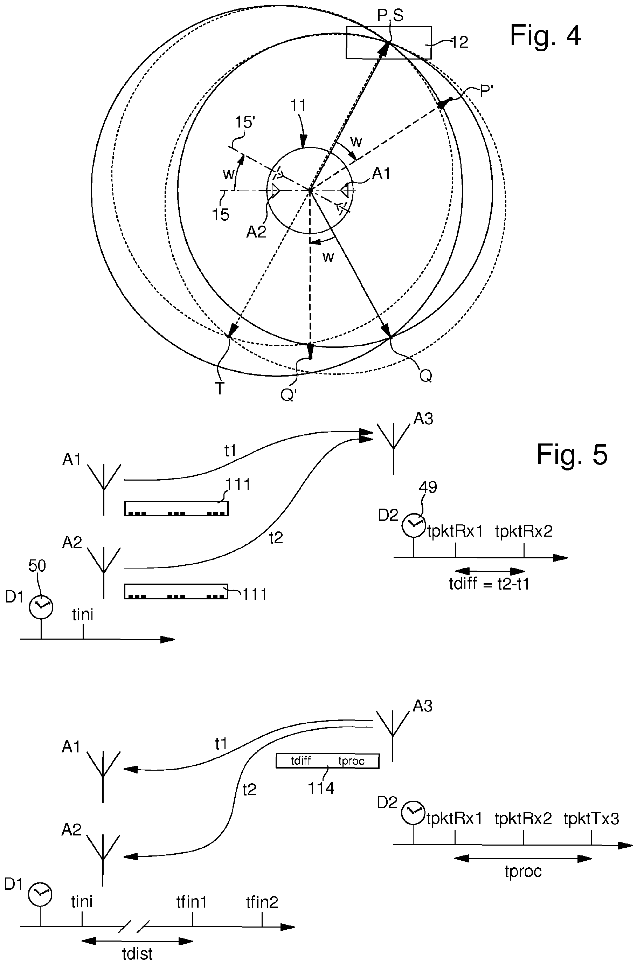

Le dispositif de recherche D1 reçoit le signal 106 dans l'étape 109 et commence alors une première séquence de localisation, par une étape 110 consistant à élaborer un signal de localisation 111, contenant aussi le code d'identité de D2, et l'émettre simultanément sur ses deux antennes A1 et A2 comme le montre la figure 5, à un instant tini qui commence un décompte du temps dans un circuit d'horloge 50 de D1. Admettons qu'à ce moment l'antenne A3 du dispositif cible soit plus proche de l'antenne A1 que de l'antenne A2, c'est-à-dire que le temps de parcours t1 du signal de localisation 111 entre A1 et A3 soit plus court que son temps de parcours t2 entre A2 et A3. Dans l'étape 112, le dispositif cible D2 reçoit le signal 111 en provenance de l'antenne A1, à un instant tpktRx1 (voir figure 5) qui initialise son circuit d'horloge 51, puis il reçoit le même signal 111 de l'antenne A2 à l'instant tpktRx2 et il mesure l'écart de temps tdiff = t2-t1 entre ces deux réceptions. Dans l'étape 113, D2 élabore et émet à l'instant tpktTx3 (voir figure 5) un signal de retour 114 qui contient l'écart de temps tdiff et une durée de traitement tproc qui est l'intervalle de temps entre tpktRx1 et tpktTx3.

En option, D2 peut effectuer une étape 115 consistant à émettre un signal sonore via son transducteur acoustique 39, pour contribuer à localiser l'objet cherché grâce à l'ouïe si les conditions le permettent. Dans une variante, la durée de traitement peut correspondre à la durée entre le deuxième signal reçu et le signal de retour. On notera qu'il est possible de prévoir, dans un autre mode de mise en oeuvre du procédé de localisation, que le temps de traitement soit prédéterminé. Connaissant les différences de temps de parcours possibles et la durée du traitement des données par le dispositif cible jusqu'à l'émission du signal de retour, il est possible de définir une période de traitement fixe qui soit suffisante et d'agencer le dispositif cible pour qu'il envoie toujours son signal de retour exactement après cette période fixe. Dans cette variante, nul besoin de transmettre une donnée relative à cette période fixe dans le signal de retour, car elle peut être introduite au préalable et de manière non volatile dans le dispositif de recherche.

Dans l'étape 116, le dispositif de recherche D1 reçoit le signal de retour 114 en premier lieu à un instant tfin1 (voir figure 5) par son antenne A1 la plus proche de l'antenne A3. Cette réception actionne un interrupteur qui isole temporairement l'antenne A2 de son récepteur UWB, pour que celui-ci ne fonctionne pas à l'instant tfin2 où le même signal sera reçu par l'antenne A2, afin de réduire la consommation d'énergie de D1. Dans le module de traitement numérique 23 de D1, la valeur tdist = tfin1-tini est mesurée au moyen d'un circuit d'horloge.

Dans l'étape 117, le module 23 de D1 calcule les temps de parcours :

$$t1 = (tdist\text{-}tproc)/2$$

$$t2 = t1\text{+}tdiff$$

qui représentent les distances correspondantes d1 et d2 entre l'antenne A3 et chaque antenne A1 et A2. Ce module calcule ensuite, par triangulation dans le plan des trois antennes à partir des valeurs de d0, d1 et d2, les coordonnées polaires de la position ou des positions possibles de l'antenne A3 et donc de l'objet cherché 12 en référence à la montre et son axe 15, puis commande une indication visuelle correspondante par les moyens d'affichage 25 et 26 de la montre 11 dans l'étape 118. On notera que si t1>t2, il convient de permuter les indices 1 et 2 dans les formules ci-dessus. On notera aussi que ce procédé peut être effectué de manière similaire en utilisant l'antenne de D1 qui reçoit le signal de retour en second.

En général, la valeur absolue de d2-d1 est inférieure à d0 et le calcul de triangulation susmentionné fournit deux positions possibles, symétriques par rapport à l'axe 15 et référencées P et Q dans la figure 3. Dans le présent exemple, les directions respectives de ces positions sont indiquées par l'aiguille des heures 51 et l'aiguille des minutes 52 de l'affichage analogique 25, tandis que leur distance commune (ici 4,9 m) est indiquée par l'affichage numérique 26. Il faut évidemment au moins une mesure additionnelle pour lever l'ambiguïté, après un mouvement imposé au dispositif de recherche D1 dans l'étape 119 pour l'amener dans une nouvelle position dans laquelle il procédera à ladite mesure. Par exemple dans la figure 3, la nouvelle position 11a est atteinte par un mouvement de translation. On remarquera que la technologie sélectionnée dans le cadre de la présente invention, à savoir la technologie UWB est un choix particulièrement approprié par le fait qu'un récepteur UWB est capable, selon le standard UWB IEEE 802.15.4a, de différencier la réception de deux signaux dès que ceux-ci ont plus de 15 ps (picosecondes) avec une largeur de bande de 499.2 Mhz (cette distance temporelle peut encore être diminuée avec une plus grande largeur de bande). Ainsi, il suffit que la différence entre d1 et d2 soit d'au moins 5 mm (millimètres) pour que le récepteur prévu dans le dispositif D2 puisse déterminer la réception des deux signaux sur sa seule antenne A3. L'invention est remarquable notamment en ce que, même avec une petite distance entre les deux antennes A1 et A2 du dispositif D1, il est prévu de gérer la réception de deux signaux, émis simultanément par ces deux antennes, par un seul et même récepteur associé à une seule antenne dans le dispositif D2. Ceci permet de consommer une énergie moindre, de calculer la différence de temps entre la réception des deux signaux à l'aide d'un circuit électronique peu complexe et d'être très précis dans la détermination de cette différence de temps.

Cependant, on notera que lorsque l'antenne A3 s'approche d'une position à la perpendiculaire de la direction d'alignement des antennes A1 et A2, le seul récepteur prévu dans D2 n'est plus à même de distinguer correctement la réception du deuxième signal. Pour répondre à ce problème particulier dans le cadre de la présente invention, au moins deux variantes peuvent être envisagées. Dans une première variante du procédé de localisation, il est prévu que l'utilisateur tourne le dispositif de recherche D1 d'un certain angle, notamment d'au moins 30 degrés, après avoir donné la commande de recherche. Le signal de localisation est émis simultanément par les deux antennes A1 et A2 de manière répétitive à intervalle de temps donné. Dès qu'un signal de retour valable est reçu, l'émission de signaux de localisation prend fin. Dans le cas contraire, l'émission prend fin après une certaine période de temps et un message de non détection est donné à l'utilisateur. Dans une deuxième variante, un seul envoi d'un signal de localisation par les deux antennes A1 et A2 est prévu. En cas de non localisation, avant de conclure à l'absence de l'objet recherché, l'utilisateur doit tourner le dispositif de recherche d'au moins un certain angle et à nouveau actionner le dispositif de commande pour engendrer l'émission d'un nouveau signal de localisation dans une nouvelle configuration spatiale. Si l'objet recherché est dans la zone de localisation, le dispositif de recherche pourra alors détecter sa position selon le procédé de l'invention. Dans une autre variante, laquelle peut aussi être combinée avec l'une des deux variantes précédentes, il est envisagé que le récepteur puisse reconnaître au moins dans certains cas la réception d'au moins un des deux signaux dont il ne peut déterminer la séparation temporelle et il envoie alors un message spécifique à l'utilisateur pour l'inviter à effectuer une rotation du dispositif de recherche avant qu'une nouvelle émission de signal de localisation ne soit effectuée, de manière automatique ou à la suite d'un nouvel actionnement des moyens de commande.

Pour effectuer la mesure additionnelle mentionnée précédemment, afin de déterminer de manière univoque la direction de l'objet recherché parmi deux directions possibles résultant du traitement d'un premier signal de retour, la figure 4 montre un mode de réalisation dudit mouvement sous forme d'une rotation limitée de la montre 11 dans le plan de son cadran afin de changer l'orientation de son axe de référence 15 sans translation, donc sans changer d'emplacement. Pour simplifier le dessin, la montre 11 est représentée seulement par sa paire d'antennes A1 et A2. Le référentiel du dessin est la terre. Les deux positions possibles de l'objet selon la première mesure sont indiquées par les points P et Q.

Après une rotation limitée w de la montre 11, par exemple dans le sens horaire, les nouvelles positions des antennes définissent une nouvelle position 15' de leur axe de référence, si bien que les coordonnées mémorisées des points P et Q définissent des points P' et Q', décalés angulairement de w à partir de P et Q. Le dispositif D1 effectue alors une seconde séquence de localisation, comprenant des étapes 120 à 125 qui sont semblables aux étapes 110, 112, 113, 115, 116 et 117 de la première séquence, mais avec des calculs complémentaires dans l'étape 125. Cette séquence est enclenchée de préférence automatiquement, après un délai compris par exemple entre quelques dixièmes de seconde et quelques secondes après l'étape 117, mais on pourrait aussi envisager de le faire par commande manuelle. La position réelle de l'objet cherché 12 n'ayant pas changé sur la terre, le calcul de triangulation effectué dans D1 fournit en général comme précédemment deux positions possibles de l'objet cherché 12, indiquées ici par les points S et T. Celui qui représente la position de l'objet 12 est celui qui coïncide pratiquement avec P ou Q, donc S coïncidant avec P dans le cas de la figure 4. Dans le référentiel basé sur l'axe 15', D1 doit sélectionner dans l'étape 125 celui des points S et T qui est décalé angulairement de -w par rapport à P' et Q', respectivement. Il commande alors une indication visuelle de la position de l'objet cherché 12 par les moyens d'affichage de la montre dans l'étape 126, la direction de cette position étant indiquée par les deux aiguilles 51 et 52 superposées, tandis que la distance est indiquée par l'affichage numérique 26.

La discrimination entre S et T en fonction du sens du décalage angulaire de chaque point, respectivement à partir de P' et Q', nécessite que soit indiqué au dispositif de recherche D1 le sens de la rotation que la montre 11 subit entre les deux séquences de localisation. Une solution simple et économique consiste à prescrire le sens de cette rotation dans le mode d'emploi, par exemple le sens horaire. Autrement, on pourrait incorporer un gyroscope dans D1, mais cela impliquerait une complication relativement coûteuse et un surcroît de consommation d'énergie. Par contre, le gyroscope permettrait de maintenir la direction des aiguilles par rapport à l'environnement quand l'orientation de la montre change après la mesure.

Si pour une raison quelconque la discrimination entre S et T n'était pas possible, D1 pourrait enregistrer leurs coordonnées à la place de celles de P et Q, puis effectuer une nouvelle séquence de localisation à partir de l'étape 120. Par contre, quand l'affichage a été fait normalement dans l'étape 126, la recherche est réputée achevée et D1 s'arrête automatiquement en 127. Une commande de fin de recherche est effectuée dans le dispositif cible D2 dans une étape 128. Elle peut se faire automatiquement, par exemple par une temporisation, ou par une action manuelle sur la touche d'entrée 38. D2 se retrouve alors en 129 dans un état de veille où seul son récepteur de réveil est sous tension.

En variante, on peut prévoir un autre mode opératoire du dispositif de recherche D1, avec une répétition périodique de la séquence de localisation dans différentes positions successives de la montre 11, tandis que l'utilisateur interprète lui-même les mouvements des aiguilles de la montre par rapport à l'environnement. Il n'y a pas besoin d'exécuter les étapes 120 à 127. La répétition continue de la séquence de localisation est représentée de manière optionnelle par la flèche 130 dans la figure 8 et peut se faire, par exemple, à une cadence de l'ordre d'une demi-seconde à une seconde. La nouvelle séquence (étapes 110 à 118) écrase les données de positions mémorisées et conduit à afficher une nouvelle distance et (généralement) deux nouvelles directions possibles de l'objet cherché 12. Il incombe à l'utilisateur d'observer les mouvements des deux aiguilles et d'en déduire laquelle indique une position relativement constante dans l'espace : c'est cette direction qui correspond à la vraie position de l'objet cherché. Ainsi, il n'est pas indispensable que le dispositif de recherche soit agencé pour discriminer laquelle des deux directions est la bonne, puisque l'utilisateur peut le faire lui-même en observant l'évolution de l'affichage.

L'interprétation peut être facilitée lorsque l'utilisateur déplace la montre dans la direction d'une des aiguilles: si cette aiguille reste dans la même direction de l'espace, c'est que la montre va bien vers l'objet cherché. Ce mode opératoire est représenté dans la figure 3. Si l'utilisateur, partant de la position initiale de la montre 11, déplace celle-ci dans la direction de la grande aiguille 52 jusqu'en 11a, la nouvelle séquence de localisation va déplacer les deux aiguilles, de sorte que la petite 51 pointe dans ce cas vers la position réelle P de l'objet 12 et la grande 52 vers le point Qa symétrique de P par rapport à la nouvelle situation 15a de l'axe de référence. Voyant que les deux aiguilles ont changé de direction, l'utilisateur doit en déduire que la translation n'a pas été faite dans la bonne direction. Si au contraire il déplace la montre dans la direction de la petite aiguille 51 de 11 à 11 b, cette aiguille pointant vers P ne change pas de direction et on en déduit que la translation est bien faite dans la direction de l'objet 12. Dans ce cas, la grande aiguille 52, pointant vers le point Qb symétrique de P par rapport à la position 15b de l'axe de référence, tourne seulement si l'orientation de cet axe change. Là aussi, l'utilisateur peut faire pivoter la montre jusqu'à ce que les deux aiguilles soient superposées. Il devra ensuite mettre fin aux itérations de localisation par une action manuelle sur les organes de commande de la montre.

Un mode opératoire analogue est applicable avec des mouvements de rotation sans translation. Dans l'exemple de la figure 4, la rotation dans le sens horaire a eu pour effet d'écarter les deux aiguilles, pour pointer vers S et T. Si au contraire l'utilisateur avait imposé une lente rotation dans le sens antihoraire, les deux aiguilles se seraient rapprochées graduellement au cours des séquences de localisation, jusqu'à ce qu'elles soient superposées, montrant ainsi la vraie direction de l'objet cherché 12.

Il importe de noter que le mode opératoire décrit ci-dessus n'est pas limité à des mouvements de pure rotation ou de pure translation de la montre, car il reste utilisable quand la montre effectue des combinaisons de translations et de rotations. Pour que l'utilisateur interprète correctement les mouvements des aiguilles, il suffit que le cadran de la montre reste approximativement dans un même plan, par exemple horizontal.

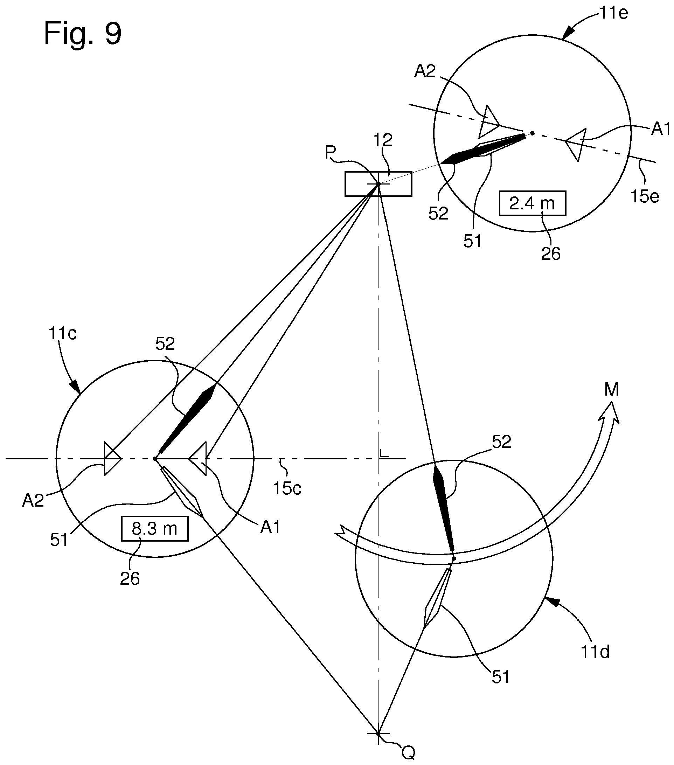

Selon un autre mode de réalisation du dispositif de recherche D1, qui n'est pas décrit en détail ici, celui-ci peut être pourvu d'une centrale inertielle comportant par exemple un accéléromètre à au moins deux axes et un gyroscope, afin de calculer les mouvements subis par la montre dans le plan du cadran, en général maintenu horizontal. Cela permet au dispositif, au moment d'une nouvelle séquence de localisation, de transformer les coordonnées des deux points mémorisés lors de la séquence précédente en coordonnées dans son référentiel déplacé et de les comparer à celles des deux nouveaux points afin de trouver lequel n'a pas bougé. Le mode opératoire d'un tel dispositif est illustré par la figure 9. Une première séquence de localisation avec la montre 11 immobile en position 11 c fournit les coordonnées des points P et Q dans le référentiel de la montre, P étant la position de l'antenne du dispositif cible D2 attaché à l'objet 12, tandis que Q est le point symétrique de P par rapport à la position 15c de l'axe de référence de la montre.

Pendant que l'utilisateur impose à la montre un mouvement M, le dispositif de recherche mesure périodiquement les composantes de ce mouvement au moyen de l'accéléromètre et du gyroscope, recalcule les coordonnées de P et Q par rapport à la nouvelle position de son référentiel et oriente en conséquence les aiguilles 51 et 52, comme on le voit dans la position intermédiaire 11d. Une seconde séquence de localisation, analogue à celle décrite en référence à la figure 8, est ensuite lancée automatiquement ou manuellement dans une position quelconque 11e de la montre. Elle permet au dispositif de recherche D1 de discriminer entre la position réelle P de l'objet 12 et celle de son image symétrique par rapport à la position actuelle 15e de l'axe de référence, et d'indiquer la direction de l'objet par superposition des deux aiguilles 51 et 52 tout en indiquant sa distance sur l'affichage numérique 26. L'utilisateur sait ainsi où se trouve l'objet cherché et peut, à son gré, poursuivre la recherche par UWB plus près ou y mettre fin.

La description qui précède montre que l'invention permet de réaliser un système de localisation s'intégrant à des appareils très peu encombrants, de sorte que les dispositifs cibles puissent être attachés discrètement aux objets à rechercher et qu'un utilisateur puisse aisément garder le dispositif de recherche avec lui en cas de besoin. Ce dernier n'est pas nécessairement combiné à une montre; on peut aussi envisager de l'incorporer à un appareil destiné seulement à cet usage ou à un autre appareil portable contenant une source d'énergie électrique, des circuits électroniques et des moyens d'affichage capables d'indiquer deux directions et une distance, par exemple un téléphone mobile ou un appareil nomade de positionnement par satellites.

**Revendications**

1. Procédé de localisation d'un objet cherché (12) au moyen de signaux électromagnétiques échangés entre un dispositif de recherche (D1), incorporé à un appareil portable (11), et un dispositif cible (D2) attaché à l'objet cherché, le dispositif de recherche (D1) comportant un émetteur-récepteur associé à une paire d'antennes (A1 et A2) espacées l'une de l'autre, des moyens d'affichage et des moyens électroniques pour gérer l'émetteur-récepteur et les moyens d'affichage, le dispositif cible (D2) comportant un émetteur-récepteur associé à une antenne (A3) et à des moyens électroniques capables de détecter la réception de signaux à bande ultra-large provenant du dispositif de recherche; ce procédé comportant une phase de localisation qui comprend au moins une séquence de localisation dans laquelle :

   a) le dispositif de recherche (D1) émet sur ses deux antennes (A1, A2) deux signaux de localisation respectifs (111),

   b) le dispositif cible (D2) recevant les deux signaux de localisation mesure une différence de temps (tdiff) entre les réceptions de ces deux signaux de localisation;

   c) le dispositif cible élabore et émet un signal de retour (114) contenant une indication relative à ladite différence entre les temps de parcours ;

   d) le dispositif de recherche (D1) mesure un temps total (tdist) entre l'émission d'au moins un des deux signaux de localisation (111) et la réception du signal de retour (114) par l'une de ses deux antennes et calcule les deux temps de parcours (t1, t2) desdits deux signaux de localisation entre l'antenne (A3) du dispositif cible (D2) et respectivement les deux antennes (A1, A2) du dispositif de recherche (D1) sur la base dudit temps total (tdist), de ladite différence de temps (tdiff) entre lesdites réceptions des deux signaux de localisation et d'une durée de traitement entre l'une ou l'autre de ces réceptions et l'émission du signal de retour; et

   e) le dispositif de recherche (D1) calcule au moins la direction ou les deux directions possibles (P, Q) de l'objet cherché (12) par triangulation, en se basant sur lesdits deux temps de parcours (t1, t2) et l'espacement (d0) entre ses deux antennes (A1, A2), et affiche au moins la direction de ladite position ou des deux positions possibles.

2. Procédé selon la revendication 1, **caractérisé en ce que** ladite durée de traitement entre la première réception ou la seconde réception du signal de localisation et l'émission du signal de retour est déterminée par le dispositif cible et transmise par ce dernier dans ledit signal de retour.

3. Procédé selon la revendication 1 ou 2, **caractérisé en ce que** la séquence de localisation est répétée périodiquement ou sur commande.

4. Procédé selon la revendication 3, **caractérisé en ce qu'**il est prévu d'imposer un mouvement au dispositif de recherche (D1) avant une répétition de la séquence de localisation et d'observer l'évolution de l'affichage après cette répétition.

5. Procédé selon la revendication 4, **caractérisé en ce que** ledit mouvement est une rotation du dispositif de recherche sur lui-même ou une translation dans la direction d'une des deux positions possibles.

6. Procédé selon la revendication 4 ou 5, **caractérisé en ce que**, dans le dispositif de recherche (D1), les coordonnées desdites positions possibles (P, Q) fournies par une première séquence de localisation sont mémorisées, les mouvements (M) du dispositif de recherche sont mesurés, les coordonnées desdites deux positions possibles et leur affichage sont remis à jour en fonction desdits mouvements, et **en ce que** les positions possibles calculées lors d'une seconde séquence de localisation sont comparées à celles de la première séquence de localisation pour déterminer la direction dudit dispositif cible.

7. Procédé selon l'une quelconque des revendications précédentes, **caractérisé en ce qu'**il comprend une phase de réveil, préliminaire à ladite phase de localisation, dans laquelle ledit dispositif cible (D2) est activé par le dispositif de recherche au moyen d'un signal de réveil (102) contenant un code d'identité du dispositif cible et répond par un signal d'accusé de réception (106).

8. Dispositif de recherche (D1), notamment pour la mise en oeuvre du procédé de localisation d'objets selon la revendication 1, comportant un émetteur-récepteur (21, 22), une paire d'antennes (A1 et A2) espacées l'une de l'autre et associées à cet émetteur-récepteur, des moyens d'affichage (25, 26) pour indiquer au moins une direction et des moyens électroniques (23) pour gérer l'émetteur-récepteur et les moyens d'affichage, l'émetteur-récepteur ayant un émetteur agencé pour émettre des signaux à bande ultra-large ;
ce dispositif étant **caractérisé en ce que** l'émetteur-récepteur (21, 22) a un récepteur agencé pour recevoir des signaux à bande ultra-large, **en ce que** ce dispositif de recherche est incorporé dans une montre électronique (11), **en ce que** lesdits moyens électroniques sont agencés pour déterminer les deux temps de parcours (t1, t2) de deux signaux de localisation (111) entre l'antenne d'un objet cible (D2) associé à un objet cherché (12) et respectivement les deux antennes (A1, A2) du dispositif de recherche incorporées dans ladite montre et pour calculer par triangulation au moins la direction dudit objet cible relativement à un axe de référence de ladite montre ou, lors d'une première mesure, deux directions possibles (P, Q) de cet objet cible en se basant sur les deux temps de parcours, correspondant à deux distances (d1, d2) entre l'antenne de cet objet cible et respectivement les deux antennes du dispositif de recherche, et l'espacement (d0) entre ces deux antennes, et **en ce que** lesdits moyens d'affichage affichent au moins ladite direction de l'objet cible.

9. Dispositif de recherche selon la revendication 8, **caractérisé en ce qu'**il est agencé pour émettre respectivement sur ses deux antennes (A1, A2) lesdits deux signaux de localisation (111) qui sont reçus successivement par ladite antenne dudit objet cible et pour recevoir sur au moins une de ses deux antennes un signal de retour (114) dudit dispositif cible contenant une indication relative à la différence de temps (tdiff) entre la première réception et la seconde réception par ce dispositif cible des deux signaux de localisation, et **en ce que** lesdits moyens électroniques sont agencés pour déterminer un temps total (tdist) entre l'émission d'au moins un des deux signaux de localisation et la réception dudit signal de retour et pour calculer lesdits deux temps de parcours (t1, t2) sur la base de ce temps total, de ladite différence de temps et d'une durée de traitement entre ladite première réception ou ladite seconde réception du signal de localisation et l'émission dudit signal de retour.

10. Dispositif de recherche selon la revendication 8 ou 9, **caractérisé en ce que** lesdits moyens d'affichage comprennent deux aiguilles (51, 52) formant également un affichage analogique de ladite montre, ces deux aiguilles pouvant être commandées pour indiquer simultanément deux directions possibles ou une seule direction déterminée en étant superposées.

11. Dispositif de recherche selon l'une quelconque des revendications 8 à 10, **caractérisé en ce que** lesdits moyens d'affichage comprennent un affichage numérique (26) formant également un affichage digital de ladite montre, cet affichage numérique étant utilisé pour indiquer une distance entre ce dispositif de recherche et ledit dispositif cible.

12. Dispositif cible (D2), notamment pour la mise en oeuvre du procédé de localisation d'objets selon la revendication 1, comportant un émetteur-récepteur (34, 35) associé à une antenne (A3) et à des moyens électroniques capables de détecter la réception de signaux provenant d'un dispositif de recherche associé, **caractérisé en ce que** l'émetteur-récepteur est du type à bande ultra-large, **en ce que** ce dispositif cible comporte un circuit de mesure d'une différence de temps de réception entre deux signaux de localisation reçus de manière décalée dans le temps, et **en ce qu'**il comprend des moyens pour élaborer et émettre un signal de retour (114) contenant une indication relative à ladite différence de temps de réception.

13. Dispositif cible (D2) selon la revendication 11, **caractérisé en ce qu'**il comprend des moyens pour déterminer une durée de traitement entre la réception d'un des deux signaux de localisation et l'émission dudit signal de retour, et **en ce qu'**il est agencé pour transmettre une indication relative à cette durée de traitement dans ledit signal de retour.

14. Dispositif cible (D2) selon la revendication 11 ou 12, **caractérisé en ce qu'**il comprend en outre un récepteur de réveil (46) agencé pour recevoir et décoder un signal de réveil alors qu'il est dans un état de veille et, lorsque le signal de réveil contient un code d'identité de ce dispositif cible, mettre en service ledit émetteur-récepteur (34, 35).

## Patentansprüche

1. Verfahren zum Lokalisieren eines gesuchten Objekts (12) mittels elektromagnetischer Signale, die zwischen einer in ein tragbares Gerät (11) eingebauten Suchvorrichtung (D1) und einer an dem gesuchten Objekt befestigten Zielvorrichtung (D2) ausgetauscht werden, wobei die Suchvorrichtung (D1) einen Sender/Empfänger, dem ein Paar voneinander beabstandeter Antennen (A1 und A2) zugeordnet ist, Anzeigemittel und elektronische Mittel zum Steuern des Sender/Empfängers und der Anzeigemittel umfasst, die Zielvorrichtung (D2) einen Sender/Empfänger umfasst, dem eine Antenne (A3) und elektronische Mittel, zugeordnet sind, die ausgelegt sind, den Empfang von von der Suchvorrichtung ausgehenden Signalen im Ultrabreitband zu detektieren, wobei das Verfahren einen Schritt des Lokalisierens umfasst, der mindestens eine Lokalisierungsfolge umfasst, in der:

    a) die Suchvorrichtung (D1) an ihren zwei Antennen (A1, A2) jeweils zwei entsprechende Lokalisierungssignale (111) aussendet,

    b) die Zielvorrichtung (D2), die die beiden Lokalisierungssignale empfängt, eine Zeitdifferenz (tdiff) zwischen dem jeweiligen Empfang dieser beiden Lokalisierungssignale misst;

    c) die Zielvorrichtung ein Rücklaufsignal (114) erzeugt und aussendet, das eine Angabe bezüglich der Differenz zwischen den Laufzeiten enthält;

    d) die Suchvorrichtung (D1) eine Gesamtzeit (tdist) zwischen dem Aussenden mindestens eines der zwei Lokalisierungssignale (111) und dem Empfang des Rücklaufsignals (114) durch eine ihrer beiden Antennen misst und die beiden Laufzeiten (t1, t2) der zwei Lokalisierungssignale zwischen der Antenne (A3) der Zielvorrichtung (D2) und den beiden jeweiligen Antennen (A1, A2) der Suchvorrichtung (D1) anhand der Gesamtzeit (tdist), der Zeitdifferenz (tdiff) zwischen dem jeweiligen Empfang der zwei Lokalisierungssignale und einer Verarbeitungsdauer zwischen dem einen oder dem anderen dieser beiden Empfänge und dem Senden des Rücklaufsignals berechnet; und

    e) die Suchvorrichtung (D1) mindestens die Richtung oder die beiden möglichen Richtungen (P, Q) des gesuchten Objekts (12) durch Triangulation berechnet basierend auf den zwei Laufzeiten (t1, t2) und dem Abstand (d0) zwischen ihren beiden Antennen (A1, A2) und mindestens die Richtung der Position oder der zwei möglichen Positionen anzeigt.

2. Verfahren nach Anspruch 1, **dadurch gekennzeichnet, dass** die Verarbeitungsdauer zwischen dem ersten Empfang oder dem zweiten Empfang des Lokalisierungssignals und dem Senden des Rücklaufsignals durch die Zielvorrichtung bestimmt wird und durch diese Letztere in dem Rücklaufsignal gesendet wird.

3. Verfahren nach Anspruch 1 oder 2, **dadurch gekennzeichnet, dass** die Lokalisierungsfolge periodisch oder auf Befehl wiederholt wird.

4. Verfahren nach Anspruch 3, **dadurch gekennzeichnet, dass** vorgesehen ist, dass die Suchvorrichtung (D1) vor einer Wiederholung der Lokalisierungsfolge eine Bewegung ausführt, und die Entwicklung der Anzeige nach dieser Wiederholung beobachtet wird.

5. Verfahren nach Anspruch 4, **dadurch gekennzeichnet, dass** die Bewegung eine Drehung der Suchvorrichtung um sich selbst oder eine Translation in Richtung einer der zwei möglichen Positionen ist.

6. Verfahren nach Anspruch 4 oder 5, **dadurch gekennzeichnet, dass** in der Suchvorrichtung (D1) die von einer ersten Lokalisierungsfolge gelieferten Koordinaten der möglichen Positionen (P, Q) gespeichert werden, die Bewegungen (M) der Suchvorrichtung gemessen werden und die Koordinaten der beiden möglichen Positionen und ihre Anzeige abhängig von diesen Bewegungen aktualisiert werden, und dass die möglichen bei einer zweiten Lokalisierungsfolge berechneten Positionen mit jenen der ersten Lokalisierungsfolge verglichen werden, um die Richtung der Zielvorrichtung zu bestimmen.

7. Verfahren nach einem der vorhergehenden Ansprüche, **dadurch gekennzeichnet, dass** vor der Lokalisierungsphase eine Weckphase ausgeführt wird, in der die Zielvorrichtung (D2) durch die Suchvorrichtung mittels eines Wecksignals (102), das einen Kennungscode der Zielvorrichtung enthält, aktiviert wird und mit einem Quittierungssignal (106) antwortet.

8. Suchvorrichtung (D1), insbesondere für die Ausführung des Verfahrens zum Lokalisieren von Objekten nach Anspruch 1, umfassend einen Sender/Empfänger (21, 22), ein Paar Antennen (A1 und A2), die voneinander beabstandet sind und diesem Sender/Empfänger zugeordnet sind, Anzeigemittel (25, 26), um mindestens eine Richtung anzugeben, und elektronische Mittel (23), um den Sender/Empfänger und die Anzeigemittel zu steuern, wobei der Sender/Empfänger einen Sender besitzt, der dafür ausgelegt ist, Signale im Ultrabreitband auszusenden; wobei diese Vorrichtung **dadurch gekennzeichnet ist, dass** der Sender/Empfänger (21, 22) einen Empfänger aufweist, der dafür ausgelegt ist, die Signale im Ultrabreitband zu empfangen, dass diese Suchvorrichtung in eine elektronische Uhr (11) eingebaut ist, dass die elektronischen Mittel dafür ausgelegt sind, die beiden Laufzeiten (t1, t2) der zwei Lokalisierungssignale (111) zwischen der Antenne eines Zielobjekts (D2), die einem gesuchten Objekt (12) zugeordnet ist, und den zwei Antennen (A1, A2) der in die Uhr eingebauten Suchvorrichtung zu bestimmen und durch Triangulation mindestens die Richtung des Zielobjekts in Bezug auf eine Referenzachse der Uhr, oder bei einer ersten Messung zwei mögliche Richtungen (P, Q) dieses Zielobjekts zu berechnen auf der Grundlage der zwei Laufzeiten, die zwei Strecken (d1, d2) zwischen der Antenne dieses Zielobjekts und jeweils den beiden Antennen der Suchvorrichtung entsprechen, und des Abstands (d0) zwischen diesen beiden Antennen, und dass die Anzeigemittel mindestens die Richtung des Zielobjekts anzeigen.

9. Suchvorrichtung nach Anspruch 8, **dadurch gekennzeichnet, dass** sie dafür ausgelegt ist, an ihren zwei Antennen (A1, A2) jeweils die beiden Lokalisierungssignale (111) auszusenden, die nacheinander durch die Antenne des Zielobjekts empfangen werden, und an mindestens einer ihrer zwei Antennen ein Rücklaufsignal (114) der Zielvorrichtung zu empfangen, das eine Angabe bezüglich der Zeitdifferenz (tdiff) zwischen dem ersten Empfang und dem zweiten Empfang der zwei Lokalisierungssignale durch diese Zielvorrichtung enthält, und dass die elektronischen Mittel dafür ausgelegt sind, eine Gesamtzeit (tdist) zwischen dem Aussenden mindestens eines der zwei Lokalisierungssignale und dem Empfang des Rücklaufsignals zu bestimmen und die zwei Laufzeiten (t1, t2) anhand dieser Gesamtzeit, der Zeitdifferenz und einer Verarbeitungsdauer zwischen dem ersten Empfang oder dem zweiten Empfang des Lokalisierungssignals und dem Senden des Rücklaufsignals zu berechnen.

10. Suchvorrichtung nach Anspruch 8 oder 9, **dadurch gekennzeichnet, dass** die Anzeigemittel zwei Zeiger (51, 52) umfassen, die ferner eine analoge Anzeige der Uhr bilden, wobei diese zwei Zeiger steuerbar sind, um gleichzeitig die zwei möglichen Richtungen oder eine einzige bestimmte Richtung anzuzeigen, indem sie überlagert werden.

11. Suchvorrichtung nach einem der Ansprüche 8 bis 10, **dadurch gekennzeichnet, dass** die Anzeigemittel eine numerische Anzeige (26) umfassen, die auch eine digitale Anzeige der Uhr bildet, wobei diese numerische Anzeige verwendet wird, um einen Abstand zwischen dieser Suchvorrichtung und der Zielvorrichtung anzugeben.

12. Zielvorrichtung (D2), insbesondere für die Ausführung des Verfahrens zum Lokalisieren von Objekten nach Anspruch 1, umfassend einen Sender/Empfänger (34, 35), dem eine Antenne (A3) und elektronische Mittel zugeordnet sind, die ausgelegt sind, den Empfang von von einer zugeordneten Suchvorrichtung ausgehenden Signalen zu detektieren, **dadurch gekennzeichnet, dass** der Sender/Empfänger vom Ultrabreitband-Typ ist, dass diese Zielvorrichtung eine Schaltung zum Messen einer Zeitdifferenz des Empfangs zwischen zwei zeitlich versetzt empfangenen Lokalisierungssignalen umfasst und dass sie Mittel zum Erzeugen und Aussenden eines Rücklaufsignals (114) umfasst, das eine Angabe bezüglich der Empfangszeitdifferenz enthält.

13. Zielvorrichtung (D2) nach Anspruch 11, **dadurch gekennzeichnet, dass** sie Mittel zum Bestimmen einer Verarbeitungsdauer zwischen dem Empfang eines der zwei Lokalisierungssignale und dem Senden des Rücklaufsignals umfasst, und dass sie dafür ausgelegt ist, eine Angabe bezüglich dieser Verarbeitungsdauer in dem Rücklaufsignal zu senden.

14. Zielvorrichtung (D2) nach Anspruch 11 oder 12, **dadurch gekennzeichnet, dass** sie außerdem einen Weckempfänger (46) umfasst, der dafür ausgelegt ist, ein Wecksignal zu empfangen und zu decodieren, während er in einem Ruhezustand ist, und dann, wenn das Wecksignal einen Kennungscode dieser Zielvorrichtung enthält, den Sender/Empfänger (34, 35) in Betrieb zu nehmen.

**Claims**

1. Method of locating a sought object (12), by means of electromagnetic signals exchanged between a search device (D1), incorporated in a portable apparatus (11), and a target device (D2) attached to the sought object, the search device (D1) including a transceiver associated with a pair of antennae (A1 and A2) spaced apart from each other, display means and electronic means for managing the transceiver and the display means, the target device (D1) including a transceiver associated with an antenna (A3) and with electronic means capable of detecting the reception of ultra wideband signals orginating from the search device;

the method including a locating phase which includes at least one locating sequence in which:

     a) the search device (D1) emits two respective locating signals (111) across the two antennae (A1, A2) thereof,

b) the target device (D2) receiving the two locating signals measures a time difference (tdiff) between the respective receptions of said two locating signals;

c) the target device elaborates and emits a return signal (114) containing an indication relating to said difference between the travel times;

d) the search device (D1) measures a total time (tdist) between the emission of at least one of the two locating signals (111) and the reception of the return signal (114) by one of its two antennae and calculates the two travel times (t1, t2) of said two locating signals between the antenna (A3) of the target device (D2) and respectively the two antennae (A1, A2) of the search device (D1) on the basis of said total time (tdist), of said time difference (tdiff) between said receptions of the two locating signals and of a processing time between one of said receptions or the other and the emission of the return signal; and

e) the search device (D1) calculates at least the direction or the two possible directions (P, Q) of the sought object (12) by triangulation, based on said two travel times (t1, t2) and the space (d0) between the two antennae (A1, A2) thereof, and displays at least the direction of said position or of the two possible positions.

2. Method according to claim 1, **characterized in that** said processing time between the first reception or the second reception of the locating signal and the emission of the return signal is determined by the target device and transmitted thereby in said return signal.

3. Method according to claim 1 or 2, **characterized in that** the locating sequence is repeated periodically or on request.

4. Method according to claim 3, **characterized in that** it is provided that a movement is imparted to the search device (D1) before a repetition of the locating sequence and that the change in the display is observed after said repetition.

5. Method according to claim 4, **characterized in that** said movement is a rotation of the search device on itself or a translation in the direction of one of the two possible positions.

6. Method according to claim 4 or 5, **characterized in that**, in the search device (D1), the coordinates of said possible positions (P, Q) supplied by a first locating sequence are stored, the movements (M) of the search device are measured, the coordinates and the display of said two possible positions are updated according to said movements, and **in that** the possible positions calculated in a second locating sequence are compared to those of the first locating sequence in order to determine the direction of said target device.

7. Method according to any of the preceding claims, **characterized in that** the method includes a wake up phase, preliminary to said locating phase, in which said target device (D2) is activated by the search device by means of a wake up signal (102) containing an identity code for the target device and responds with an acknowledgement of receipt signal (106).

8. Search device (D1), notably for implementing the object location method according to claim 1, including a transceiver (21, 22), a pair of antennae (A1 and A2) spaced apart from each other and associated with said transceiver, display means (25, 26) for indicating at least one direction and electronic means (23) for managing the transceiver and the display means, the transceiver having a transmitter arranged for emitting ultrawide band signals; said device being **characterized in that** the transceiver (21, 22) has a transceiver arranged for receiving ultrawide band signals, **in that** the search device is incorporated in an electronic watch (11), **in that** said electronic means are arranged for determining the two travel times (t1, t2) of two locating signals (111) between the antenna of a target object (D2) associated with a sought object (12) and respectively the two antenna (A1, A2) of the search device incorporated in said watch and for calculating by triangulation at least the direction of said target object relative to a reference axis of said watch or, in a first measurement, two possible directions (P, Q) of said target object based on the two travel times, corresponding to two distances (d1, d2) between the antenna of said target object and respectively the two antennae of the search device, and on the space (d0) between said two antennae, and **in that** said display means display at least said direction of the target object.

9. Search device according to claim 8, **characterized in that** the device is arranged to emit respectively across the two antennae (A1, A2) thereof, said two locating signals (111) which are received in succession by said antenna of said target object. and to receive across at least one of the two antennae thereof a return signal (114) from said target device containing an indication relating to the time difference (tdiff) between the first reception and the second reception by said target device of the two locating signals, and **in that** said electronic means are arranged to determine a total time (tdist) between the emission of at least one of the two locating signals and the reception of said return signal and to calculate said two travel times (t1, t2) on the basis of said total time, of said time difference and of a processing time between said first reception or said second reception of the locating signal and the emission of said return signal.

10. Search device according to claim 8 or 9, **characterized in that** said display means include two hands (51, 52) also forming an analogue display of said watch, said two hands being controllable to simultaneously indicate two possible directions or a single determined direction by superposition.

11. Search device according to any of claims 8 to 10, **characterized in that** said display means include a digital display (26) also forming a digital display of said watch, said digital display being used to indicate a distance between said search device and said target device.

12. Target device (D2), notably for implementing the object location method according to claim 1, including a transceiver (34, 35) associated with an antenna (A3) and with electronic means capable of detecting reception of signals originating from an associated search device; **characterized in that** the transceiver is an ultra wideband transceiver, **in that** the target device includes a circuit for measuring a difference in reception time between two locating signals received at different times, and **in that** the target device includes means for elaborating and emitting a return signal (114) containing an indication relating to said difference in reception time.

13. Target device (D2) according to claim 11, **characterized in that** the target device includes means for determining a processing time between the reception of one of the two locating signals and the emission of said return signal, and **in that** the target device is arranged for transmitting an indication relating to said processing time in said return signal.

14. Target device (D2) according to claim 11 or 12, **characterized in that** the target device further includes a wake-up receiver (46) arranged for receiving and decoding a wake-up signal when said device is in a standby state and, when the wake-up signal contains an identity code for said target device, for switching on said transceiver (34, 35).

Fig. 1

Fig. 2

# Fig. 3

Fig. 4

Fig. 5

Fig. 6

Fig. 7

**D1**                     **D2**                     **D3**

| 101 |        | 103 |        | 107 |

102

| 104 |        | 108 |

106

| 109 |        | 105 |

111

| 110 |        | 112 |

114

| 116 |        | 113 |

| 117 |        | 115 |

| 118 |

| 119 |

130

111

| 120 |        | 121 |

114

| 124 |        | 122 |

| 125 |        | 123 |

| 126 |

| 127 |        | 128 |

| 129 |

Fig. 8

Fig. 9

**RÉFÉRENCES CITÉES DANS LA DESCRIPTION**

**Documents brevets cités dans la description**

- US 20060033662 A
- US 20080136644 A
- EP 1630966 A
- WO 2006098791 A
- US 2003034887 A

**Littérature non-brevet citée dans la description**

- **N. PLETCHER et al.** A 2GHz 52$\mu$W Wake-Up Receiver With -72dBm Sensitivity Using Uncertain-IF Architecture. *IEEE International Solid-State Circuits Conference, Digest of Technical Papers,* 2008, 524-525